# EUROPEAN PATENT APPLICATION

(11) **EP 2 341 256 A2**
(43) Date of publication of application: **06.07.2011**
(21) Application number: 11000035.3
(22) Date of filing: 04.01.2011
(51) Int. Cl.: F16B 45/02

(54) **Hook with spring and indicator**

(30) Priority: 04.01.2010 AU 2010900017
(71) Applicant: MRM Holdings Limited, Port Louis (MU)
(72) Inventor: Schlipper, Robert Wesley, Hong Kong (HK)
(74) Representative: Jaeger, Michael David

(57) **Abstract**

A carabiner comprises a generally C-shaped body (10) having a first end region (11), a second end region (12), and an elongated section (15) there between. A gate (13) mounted at the second end region (12) is pivotable between a closed position and an open position. A sleeve (14) is screw-threaded for movement axially between first and second positions in which the first end region (11) is spaced from and received in the sleeve (14) respectively. In one aspect of the invention, visual indicia (32) are provided on the first end region (11), the visual indicia (32) being exposed when the sleeve (14) is in its first position, and covered by the sleeve (14) when the sleeve (14) is in its second position. In another aspect of the invention, resilient biasing means (35) are provided to urge the sleeve (14) towards its second position.

## Description

### Technical field

The present invention relates to carabiners, particularly carabiners adapted for use with safety restraints in industrial settings.

### Background of the Invention

Carabiners are hook-type gated fasteners typically associated with climbing, but which also have many other applications. Generally, a carabiner includes a C-shaped body having a gate which may be opened to insert a line, or the like. The gate is shut, typically, by a spring which urges the gate closed. The gate may be further secured in a closed position by a locking mechanism, such as a screw, which locks the gate to prevent unintentional opening thereof.

Severe demands can be placed upon carabiners used in industry, and they must provide high reliability throughout their working life. For instance, carabiners used to provide fasteners in applications, such a securing fall arrest safety nets in offshore oil rigs, can be subject to highly corrosive environments and continual vibration. It will be understood that there is an ongoing need for improvements in carabiners adapted for such applications.

### Disclosure of the Invention

According to one aspect of the present invention there is provided a carabiner comprising:
a generally C-shaped body having a first end region, a second end region, and an elongated section therebetween;
a gate mounted at the second end region and being pivotable between a closed position and an open position; and
a sleeve that is screw-threaded for movement axially between first and second positions in which the first end region is spaced from and received in the sleeve respectively, and
visual indicia on the first end region, the visual indicia being exposed when the sleeve is in its first position, and covered by the sleeve when the sleeve is in its second position.

Preferably the visual indicia comprise a coating bonded to the first end region. Alternatively the visual indicia may comprise one or more raised or recessed features formed in the surface of the first end region, such as an arrangement of one or more ribs, nubs, notches, or slots. The coating may be provided over a continuous or discontinuous surface having one or more raised or recessed features.

The coating may stand raised above the adjacent surface of the body. Alternatively the surface of the first end region to which the coating is applied may be recessed below an adjacent surface of the body, such that the coating is substantially flush with the adjacent surface of the body.

Preferably the generally C-shaped body and the sleeve have a first colour, and the coating has a second colour that contrasts with the first colour. The coating may be fluorescent.

Preferably the first end includes a female structure recessed from a substantially cylindrical surface, the female structure being configured to receive a male section of the gate, and wherein the coating is applied to the substantially cylindrical surface.

In another aspect the invention provides a carabiner comprising:
a generally C-shaped body having a first end region, a second end region, and an elongated section therebetween;
a gate mounted at the second end region and being pivotable between a closed position and an open position; and
a sleeve that is screw-threaded for movement axially between first and second positions in which the first end region is spaced from and received in the sleeve respectively, and
resilient biasing means urging the sleeve toward its second position.

Preferably the resilient biasing means comprises a helical spring having a longitudinal axis, one end of the helical spring abutting an end of the sleeve, with the gate extending centrally through the helical spring.

Preferably the ends of the wire, from which the helical spring is formed, are tapered such that the ends of the spring are bounded by respective planes transverse to the longitudinal axis.

Preferably, disposed opposite the one end, an opposing end of the helical spring abuts a shoulder on the second end region. Preferably the generally C-shaped body includes a neck separating first and second body portions of relatively larger internal dimensions, the first body portion being semi-circular and disposed adjacent the neck, a ring received in the first body portion, and wherein the opposing end of the helical spring abuts the shoulder and the ring. Preferably the ring is swaged into the first body portion.

This invention provides a carabiner which is effective in operational use, and which reduces safety auditing costs, by allowing a simple visual check to confirm that the carabiner is properly locked closed. The resilient biasing means engaging the locking sleeve ensure that it cannot become unintentionally unlocked, even under harsh vibration.

### Brief Description of the Drawings

Preferred forms of the present invention will now be described by way of example with reference to the accompanying drawings, wherein:
Figure 1 is a side view of a carabiner according to an embodiment of the invention;
Figure 2 is a fragmentary perspective view of mating male and female parts of the carabiner body and gate of the carabiner of Fig. 1, and
Figure 3 is a section along line AA of Fig. 1.

### Description of the Preferred Embodiments

Referring to the drawings a carabiner includes a generally C-shaped body 10, a gate 13 and a locking sleeve 14. As known in the art, these parts of the carabiner may be formed from a variety of metals and alloys, such as aluminum alloys and steel. The body of the carabiner may be shaped by bending into the desired shape, followed by pressing or machining to impart a desired cross-section configuration, and heat treating, as necessary or desired, to increase the strength or alter other properties thereof.

The body 10 has a first end region 11 and a second end region 12, with an elongated arcuate section 15 therebetween. A neck 16 separates first and second curved body portions 17 and 18 extending from the end regions 11, 12 and which define opposing broader and narrower ends of the body respectively having relatively larger internal dimensions than the narrow neck 16. The first body portion 17 is semi-circular, while the second portion 18 is elongated. Adjacent the neck 16 on the first body portion 17 opposing shoulders 21, 22 are formed, as by a pressing operation. A ring 19 is received in the first body portion 17, and has a swaged form with a concave circumferential outer surface 20 engaged with the inner face of the first body portion 17. The first end 11 includes a female structure 27 recessed from a cylindrical surface 28.

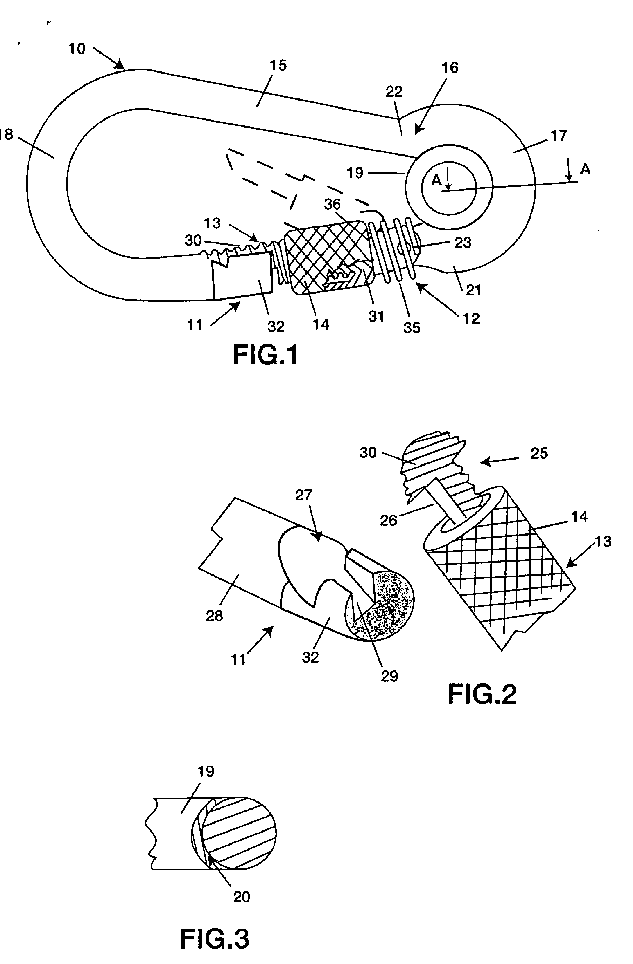

The gate 13 is connected at its inner end by a pivot 23 to the second end region 12, being pivotable between the closed position shown and an open position (shown in dashed outline in Fig. 1). A gate-biasing spring (not shown) urges the gate 13 to its closed position. The outer end of the gate 13 includes an external screw threaded face 30. A male section 25 on the end of the gate 13 includes a waist 26, best seen in Fig. 2.

The sleeve 14 has an internal thread 31 engaged with the screw threaded face 30. so that the sleeve 14 is moveable axially between the first position shown in which the first end region 11 is spaced from the sleeve 14, and a second position (not shown) in which the first end region 11 is received in the sleeve 14 thereby locking the gate 13 closed.

The female structure 27 is configured to receive male section 25, with the waist 26 received in a slot 29, and with the screw threaded face 30 generally coaxial with the cylindrical surface 28.

Visual indicia in the form of a coating of paint 32 (illustrated by the cross-hatched area) is provided on the first end region 11, specifically on the section of the cylindrical surface 28 which is covered by the sleeve 14 when the sleeve 14 is in its second position. Advantageously, the coating of paint 32 may be provided in red, or another colour which contrasts with the uncoated silver/grey of the metal body 10 and sleeve 14. The coating of paint 32 is exposed with the sleeve 14 is in its first position, and remains at least partially exposed while the sleeve 14 is turned until the sleeve 14 is in its second, locked position where it is completely covered. Thus the user is provided with a visual indicator that the carabiner is unlocked.

A helical spring 35 extends around the gate 13 with which it is coaxial. One end of the spring 35 abuts a plain annular face 36 on the end of the sleeve 14, and an opposing end abuts both the shoulder 21 and the ring 19. The ends of the spring 35 are ground whereby the ends of the wire, from which the helical spring is wound, are tapered such that the ends of the spring are bounded by respective planes transverse to the longitudinal axis. In the embodiment illustrated the threads 30, 31 and the helical spring 35 are right-handed. The spring 35 thus prevents the sleeve 14 from moving to its open position, even under harsh vibrating loads.

Although the foregoing description contains many specifics, these are not to be construed as limiting the scope of the present invention, but merely as providing certain exemplary embodiments. Similarly, other embodiments of the invention may be devised which do not depart from the spirit or scope of the present invention. The scope of the invention is, therefore, indicated and limited only by the appended claims and their legal equivalents, rather than by the foregoing description. All additions, deletions, and modifications to the invention, as disclosed herein, which fall within the meaning and scope of the claims are encompassed by the present invention.

## Claims

1. A carabiner comprising:
a generally C-shaped body having a first end region, a second end region, and
an elongated section therebetween;
a gate mounted at the second end region and being pivotable between a closed position and an open position: and
a sleeve that is screw-threaded for movement axially between first and second positions in which the first end region is spaced from and received in the sleeve respectively, and
visual indicia on the first end region, the visual indicia being exposed when the sleeve is in its first position, and covered by the sleeve when the sleeve is in its second position.

2. The carabiner of claim 1 wherein the visual indicia comprises a coating bonded to the first end region.

3. The carabiner of any one of the preceding claims wherein the generally C-shaped body and the sleeve have a first colour, and the coating has a second colour that contrasts with the first colour.

4. The carabiner of any one of the preceding claims wherein the first end includes a female structure recessed from a substantially cylindrical surface, the female structure being configured to receive a male section of the gate, and wherein the coating is applied to the substantially cylindrical surface.

5. The carabiner of any one of the preceding claims further comprising resilient biasing means urging the sleeve toward its second position.

6. A carabiner comprising:
a generally C-shaped body having a first end region, a second end region, and
an elongated section therebetween;
a gate mounted at the second end region and being pivotable between a closed position and an open position: and
a sleeve that is screw-threaded for movement axially between first and second positions in which the first end region is spaced from and received in the sleeve respectively, and
resilient biasing means urging the sleeve toward its second position.

7. The carabiner of claim 5 or claim 6 wherein the resilient biasing means comprises a helical spring having a longitudinal axis, one end of the helical spring abutting an end of the sleeve, with the gate extending centrally through the helical spring.

8. The carabiner of any one of the claims 5-7 wherein the ends of the wire, from which the helical spring is formed, are tapered such that the ends of the spring are bounded by respective planes transverse to the longitudinal axis.

9. The carabiner of any one of the claims 5-8 wherein, disposed opposite the one end, an opposing end of the helical spring abuts a shoulder on the second end region.

10. The carabiner of any one of the claims 5-9 wherein the generally C-shaped body includes a neck separating first and second body portions of relatively larger internal dimensions, the first body portion being semi-circular and disposed adjacent the neck, a ring received in the first body portion, and wherein the opposing end of the helical spring abuts the shoulder and the ring.

11. The carabiner of claim 10 wherein the ring is swaged into the first body portion.
